Europäisches Patentamt

European Patent Office

Office européen des brevets

(11) Veröffentlichungsnummer: **0 482 406 A1**

# (12) EUROPÄISCHE PATENTANMELDUNG

(21) Anmeldenummer: **91117001.7**

(22) Anmeldetag: **05.10.91**

(51) Int. Cl.5: **B65G 47/90**, B66C 1/28

(30) Priorität: **22.10.90 DE 4033587**

(43) Veröffentlichungstag der Anmeldung:
**29.04.92 Patentblatt 92/18**

(84) Benannte Vertragsstaaten:
**DE FR GB IT**

(71) Anmelder: **Focke & Co. (GmbH & Co.)**
**Siemensstrasse 10**
**W-2810 Verden(DE)**

(72) Erfinder: **Focke, Heinz**
**Moorstrasse 64**
**W-2810 Verden(DE)**
Erfinder: **Holloch, Johannes**
**Etelser Strasse 21**
**W-2815 Langwedel(DE)**

(74) Vertreter: **Bolte, Erich, Dipl.-Ing. et al**
**Meissner, Bolte & Partner Anwaltssozietät**
**Hollerallee 73**
**W-2800 Bremen 1(DE)**

(54) **Vorrichtung zum Handhaben von Gegenständen, wie Kartons.**

(57) Zum Transportieren, nämlich Anheben, Fördern und Absetzen von Kartons (10) und dergleichen, dienen in der Verpackungstechnik Palettierer (23). An einem Gelenkarm (24) befindet sich ein Greifer (27), der an aufrechten Tragarmen (29, 30) Tragschenkel (31, 32) aufweist zum Erfassen des Kartons (10) an der Unterseite. Die Tragschenkel sind schwenkbar aus einer horizontal gerichteten Tragstellung in eine im wesentlichen vertikale Freigabestellung. Letztere ermöglicht das störungsfreie Anheben des Greifers nach Absetzen eines Kartons auch bei engen räumlichen Verhältnissen.

Die Tragarme (29, 30) des Greifers (27) sind ihrerseits schwenkbar aus einer im wesentlichen aufrechten Position in eine spreizende Schrägstellung, um Kartons bei horizontal gerichteten Tragschenkeln (31, 32) erfassen zu können.

Fig. 2

EP 0 482 406 A1

Die Erfindung betrifft eine Vorrichtung zum Aufnehmen, Fördern und Absetzen von Gegenständen, insbesondere Kartons, mit einem heb- und senkbaren sowie quer verfahrbaren Greifer zum Erfassen wenigstens eines Gegenstands (Kartons) mit aufrechten Tragarmen, die sich beim Transport eines Gegenstands (Kartons) zu beiden Seiten desselben erstrecken, und mit schwenkbar an den Tragarmen angebrachten Tragschenkeln, die durch aufrechte Betätigungsorgane (Betätigungsstege) in eine horizontal gerichtete Tragstellung bzw. in eine im wesentlichen vertikal gerichtete Freigabestellung bewegbar sind.

Die Erfindung befaßt sich mit einem Thema aus der Transporttechnik. Es geht um die Handhabung von quaderförmigen Gegenständen, insbesondere größeren Kartons. Diese kommen beispielsweise auf einem Zuförderer (Band- bzw. Rollenförderer) an und werden z.B. auf eine Palette oder auch auf einen anderen Förderer umgeladen. Hierfür werden in der Praxis überwiegend Palettierer eingesetzt. Diese werden auch als Roboter bezeichnet. Zum Erfassen des Gegenstands (Kartons) dient ein Greifer, der am Ende eines Gelenkarms angebracht ist. Der Gelenkarm ist seinerseits an einer Tragsäule dreh- und hebbar gelagert. Die DE-A-37 20 933 zeigt ein Beispiel für einen derartigen Palettierer.

Bei der Erfindung geht es konkret um die Ausgestaltung eines Greifers für eine derartige oder andere Fördervorrichtung. Vielfach können die bekannten Greifer mit Saugorganen zum Erfassen des Gegenstands an der Oberseite nicht eingesetzt werden, z.B. bei oben offenen Kartons mit darin enthaltenen Einzelgegenständen. In diesen Fällen ist es erforderlich, den Gegenstand durch mechanische Tragorgane an der Unterseite zu erfassen.

Der Erfindung liegt die Aufgabe zugrunde, eine Fördervorrichtung mit einem Greifer der vorstehenden Art weiterzuentwickeln und zu verbessern, dahingehend, daß auch mit einem derartigen Greifer die Gegenstände in enger Nachbarschaft zu anderen Gegenständen abgesetzt werden können, z.B. unter Bildung von Lagen auf einer Palette.

Zur Lösung dieser Aufgabe ist die erfindungsgemäße Vorrichtung bzw. deren Greifer dadurch gekennzeichnet, daß die Tragschenkel als einarmige Hebel ausgebildet und die Betätigungsorgane (Betätigungsstege) auf der dem Gegenstand (Karton) zugekehrten Seite mit Abstand von den Tragarmen gelenkig mit den Tragschenkeln verbunden sind, derart, daß die Tragschenkel ausschließlich durch Zugkräfte in den Betätigungsorganen (Betätigungsstegen) in der Tragstellung gehalten sind.

Durch diese Ausbildung des Greifers ist es möglich, die Gegenstände bei quergerichteten Tragschenkeln zu erfassen und zu handhaben.

Nach dem Absetzen des Gegenstands bzw. unmittelbar davor werden die Tragschenkel in eine Stellung verschwenkt, in der sie außer Eingriff mit dem Gegenstand sind. Der Greifer kann dadurch aufwärts bewegt werden. Dabei wird für die Tragschenkel in der aufrechten bzw. vertikalen Position nur ein schmaler, spaltartiger Raum für die Aufwärtsbewegung benötigt. Die Gegenstände können dadurch verhältnismäßig dicht aneinander gestellt werden.

Die Tragschenkel sind an aufrechten Tragarmen des Greifers gelagert, nämlich an den unteren Enden derselben. Die Tragarme sind so ausgebildet, daß sie ebenfalls wenig Raum beanspruchen. Vorzugsweise sind demnach die Tragarme als breite Bleche ausgebildet, an deren unterem Rand die Tragschenkel mittels Schanieren schwenkbar befestigt sind.

Die Betätigung, nämlich Bewegung der Tragschenkel, erfolgt vom oberen Teil des Greifers aus. Zu diesem Zweck führen Betätigungsorgane, nämlich dünnwandige Schub- und Zugorgane, zu den Tragschenkeln. Bei einer bevorzugten Ausführungsform sind diese Betätigungsorgane als Betätigungsstege aus einem Flachprofil ausgebildet.

Die Tragschenkel sind als zweiarmige, schwenkbare Hebel gelagert. Ein kurzes, freies Betätigungsende ist schwenkbar, nämlich über ein (zweites) Scharnier mit dem unteren Ende der Betätigungsstege verbunden. In der aufrechten Stellung der Tragschenkel liegen die beiden Scharniere übereinander, so daß geringe Querabmessungen gegeben sind.

Zur Betätigung der Tragschenkel sind auf einem dem Schwenkarm der Fördervorrichtung zugeordneten Träger Betätigungsorgane angeordnet, nämlich Druckmittelzylinder.

Gemäß einem weiteren besonderen Merkmal der Erfindung sind mehrere, insbesondere zwei Gruppen von aus zwei einander gegenüberliegenden Tragarmen mit Tragschenkeln vorgesehen. Mit einem so ausgerüsteten Greifer können gleichzeitig mehrere, insbesondere zwei Gegenstände nebeneinander oder ein entsprechend doppelt großer Gegenstand erfaßt werden. Da die Tragorgane, nämlich Tragarme mit Tragschenkeln, individuell bzw. gruppenweise betätigt werden können, ist es möglich, die erfaßten Gegenstände einzeln abzusetzen.

Weitere Merkmale der Erfindung betreffen die Ausgestaltung des Greifers und der Tragorgane für die Gegenstände sowie die Fördervorrichtung im Ganzen.

Ein Ausführungsbeispiel wird nachfolgend anhand der Zeichnungen näher erläutert. Es zeigt:

Fig. 1    eine Anlage zum Beladen von (zwei) Paletten mit Kartons im Grundriß,

Fig. 2    eine Einzelheit eines Greifers in Seitenansicht bei Aufnahme eines Gegenstands (Kartons),

Fig. 3 eine Darstellung entsprechend Fig. 2 während der Aufnahme eines Gegenstand durch den Greifer,

Fig. 4 eine Position des Greifers nach dem Absetzen eines Gegenstands auf einem Stapel,

Fig. 5 eine gegenüber Fig. 2 und Fig. 3 um 90° versetzte Ansicht eines Greifers bzw. eines Tragorgans desselben,

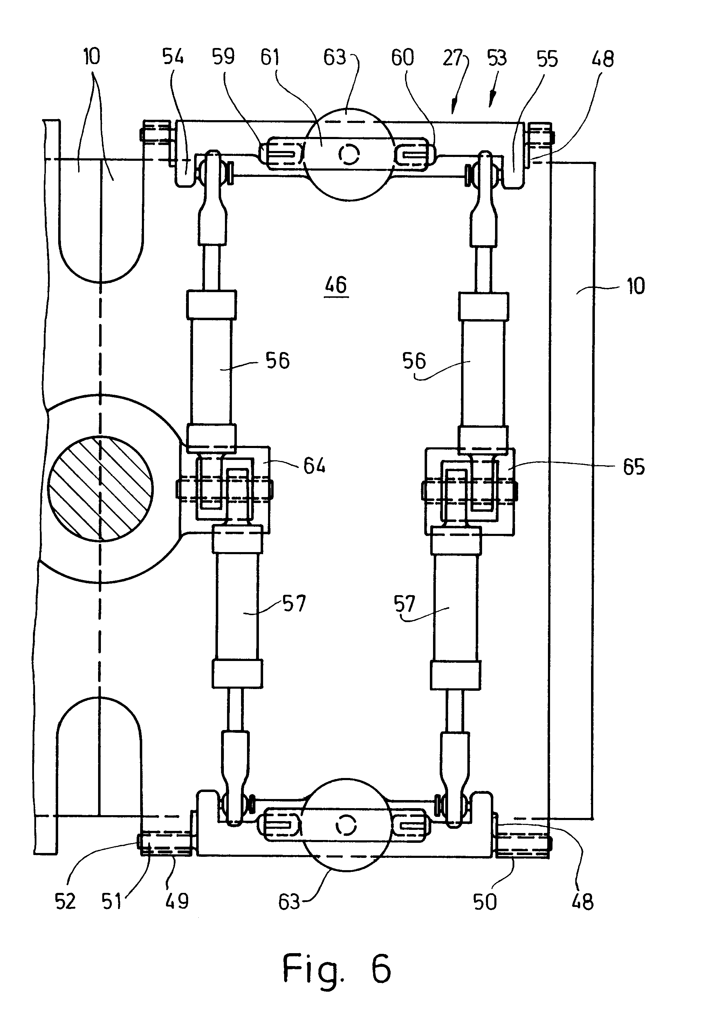

Fig. 6 eine Draufsicht auf einen Teil des Greifers,

Fig. 7 eine Einzelheit des Greifers, nämlich das untere Ende eines Tragorgans, in vergrößertem Maßstab,

Fig. 8 einen Schnitt durch die Einzelheit gemäß Fig. 7 in der Ebene VIII - VIII,

Fig. 9 einen Schnitt durch die Einzelheit gemäß Fig. 7 in der Ebene IX - IX,

Fig. 10 die Einzelheit gemäß Fig. 7 bei veränderter Darstellung, nämlich bei gestrecktem Tragschenkel,

Fig. 11 einen Schnitt durch die Einzelheit gemäß Fig.10 in der Ebene XI - XI bei Einleitung der Schwenkbewegung des Tragschenkels in die Tragstellung und

Fig. 12 eine Darstellung entsprechend Fig. 11 bei vollständig gestrecktem Tragschenkel.

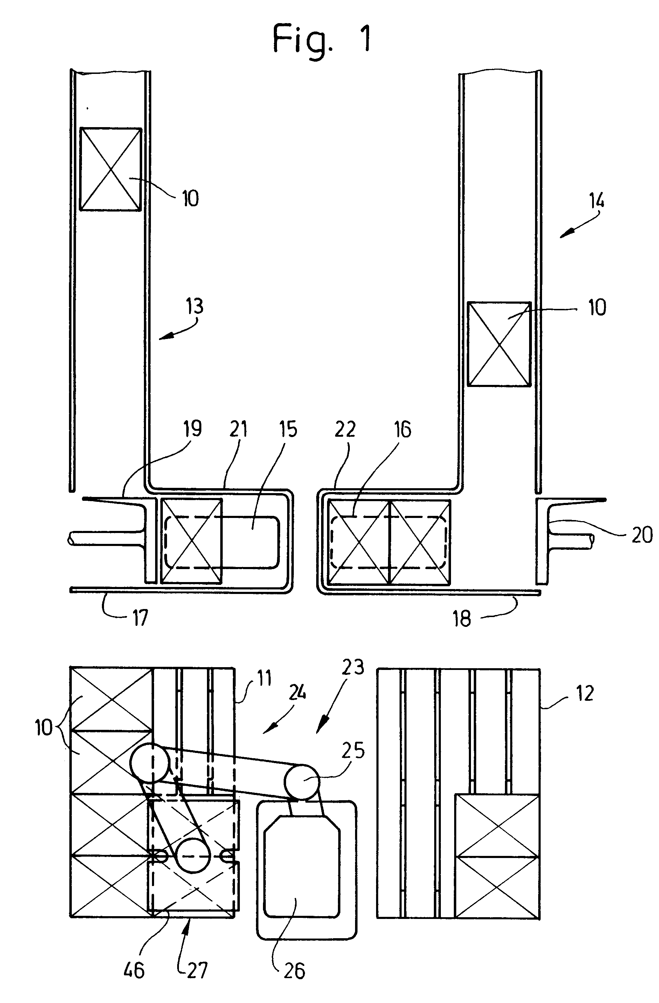

Bei dem gezeigten Ausführungsbeispiel geht es um Handhabung von quaderförmigen Gegenständen, nämlich Kartons 10. Bei diesen Kartons handelt es sich vorzugsweise um solche, die ein Erfassen an der Oberseite nicht zulassen. Beipiel hierfür sind oben offene Kartons mit Einzelpackungen, z.B. für Kekse. Die Kartons 10 sind auf Paletten 11, 12 umzuladen. Bei der Anordnung gemäß Fig. 1 werden die Kartons 10 durch zwei im Abstand voneinander angeordnete Zuförderer 13, 14 von einer Verpackungsmaschine kommend in unregelmäßigen Abständen angeliefert. An den Enden der Zuförderer 13, 14 werden die Kartons 10 auf eine Plattform 15, 16 geschoben. Diese ist jeweils seitlich versetzt zum Zuförderer 13, 14 angeordnet, und zwar auf einander zugekehrten Seiten.

Die Kartons 10 laufen auf den Zuförderern 13, 14 gegen einen Endanschlag 17, 18. In dieser Position kann der zugeförderte Karton 10 durch einen Schieber 19, 20 erfaßt werden, der dem Karton 10 quer zur Zuförderrichtung auf die Plattform 15, 16 schiebt.

Die Plattformen 15, 16 sind heb- und senkbar. Dadurch können die Kartons 10 für die weitere Handhabung aus dem Bereich von seitlichen Führungsschienen 21, 22 herausgehoben werden. Die Führungsschienen 21, 22 bilden auch einen Anschlag für die Positionierung der Kartons 10 auf der Plattform 15, 16. Darüber hinaus kann die Plattform 15, 16 eine Teilstrecke des Hubes beim Transport der Kartons 10 übernehmen.

Eine Besonderheit besteht im vorliegenden Falle in der Handhabung von jeweils zwei Kartons 10. Die Plattformen 15, 16 sind so bemessen, daß sie jeweils zwei Kartons 10 aufnehmen können. Diese werden nacheinander aufgeschoben und gemeinsam abgefördert.

Zur Übernahme der Kartons 10 von der Plattform 15, 16 und zum Absetzen auf der einen oder anderen Palette 11, 12 dient ein Palettierer 23. Dieser ist mit einem Gelenkarm 24 versehen, der um ein Drehlager 25 schwenkbar ist. Dieses wiederum ist mit dem Gelenkarm 24 an einer aufrechten Tragvorrichtung 26 auf- und abbewegbar. Der Palettierer 23 ist in bekannter Weise so ausgebildet, daß mit dem Gelenkarm 24 die Kartons 10 von der Plattform 15, 16 bis zu der gewünschten Position auf der Palette 11, 12 transportiert werden können.

Am freien Ende des Gelenkarms 24 ist ein Greifer 27 angeordnet. Dieser ist so ausgebildet, daß die Kartons 10 erfaßt, angehoben, transportiert und auf den Paletten 11, 12 abgesetzt werden können. Bei dem vorliegenden Ausführungsbeispiel ist der Greifer 27 so bemessen, daß die beiden auf der Plattform 15, 16 nebeneinander liegenden Kartons 10 gemeinsam erfaßt und gemeinsam oder individuell abgesetzt werden können.

Der Greifer 27 ist so ausgebildet, daß die Kartons 10 für die Handhabung, nämlich den Transport, an der Unterseite erfaßt werden. Die quaderförmigen Kartons 10 werden im vorliegenden Falle an zwei einander gegenüberliegenden Schmalseiten im Bereich eines Randstreifens einer Bodenwand 28 erfaßt.

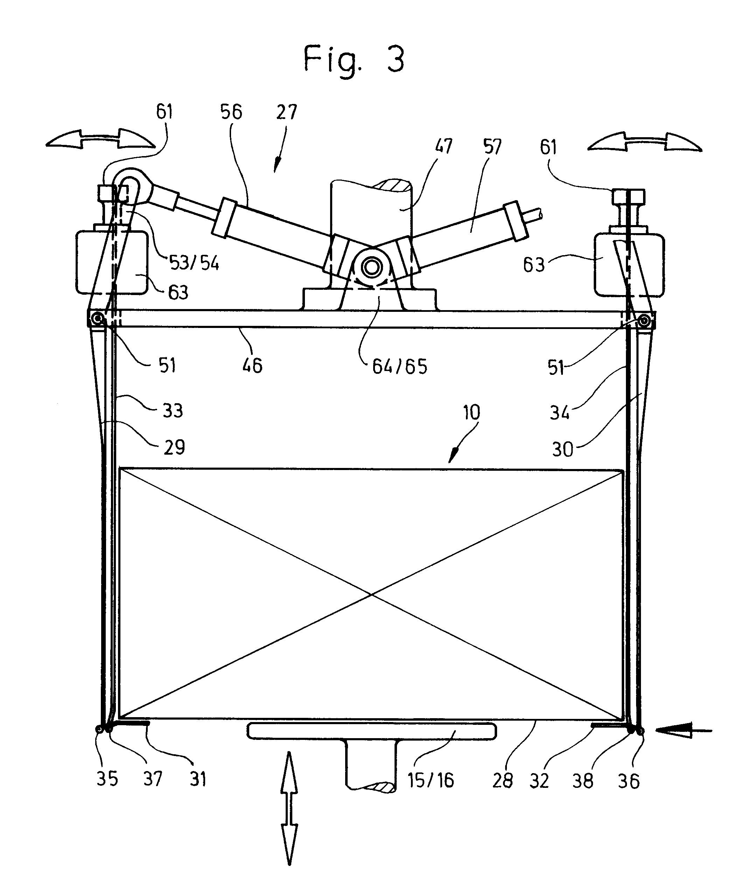

Der Greifer 27 ist zu diesem Zweck mit zwei einander gegenüberliegenden Tragarmen 29, 30 ausgerüstet. Diese sind in einem Abstand voneinander angeordnet, der der entsprechenden (Längs-)Abmessung des Kartons 10 entspricht. An den unteren Enden der Tragarme 29, 30 befinden sich Tragschenkel 31, 32. Diese sind für die Aufnahme und den Transport der Kartons 10 (annährend) horizontal gerichtet. Bei aufrechter Anordnung der Tragarme 29, 30 treten die Tragschenkel 31, 32 randseitig unter den Karton 10 (Fig. 3).

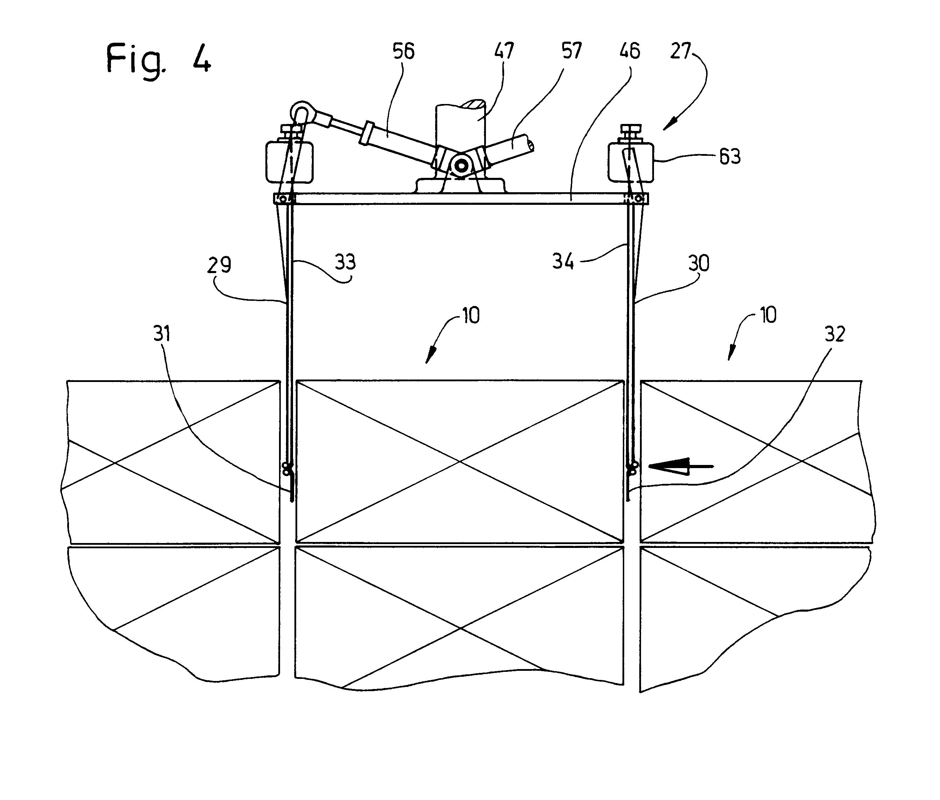

Die Tragschenkel 31, 32 können bei Aufrechterhaltung der Vertikalstellung der Tragarme 29, 30 außer Eingriff mit dem Karton 10 bewegt werden. Zu diesem Zweck sind die Tragschenkel 31, 32 gelenkig am unteren Ende der Tragarme 29, 30 gelagert. Durch Schwenkbewegung können die Tragschenkel 31, 32 aus der im wesentlichen horizontal gerichteten Tragstellung (Fig. 3) in eine aufrechte bzw. vertikale Stellung bewegt werden (Fig. 4). Diese Stellung der Tragschenkel 31, 32 wird vor allem beim Absetzen der Kartons 10 eingestellt.

Zum Verschwenken der Tragschenkel 31, 32 sind als Betätigungsorgane Betätigungsstege 33, 34 vorgesehen. Diese verlaufen mit geringem Abstand von den zugeordneten Tragarmen 29, 30, im vorliegenden Falle parallel zu diesen. Die Betätigungsstege 33, 34 übertragen Zug- oder Druckkräfte auf die Tragschenkel 31, 32 und bewirken dadurch die Schwenkbewegung.

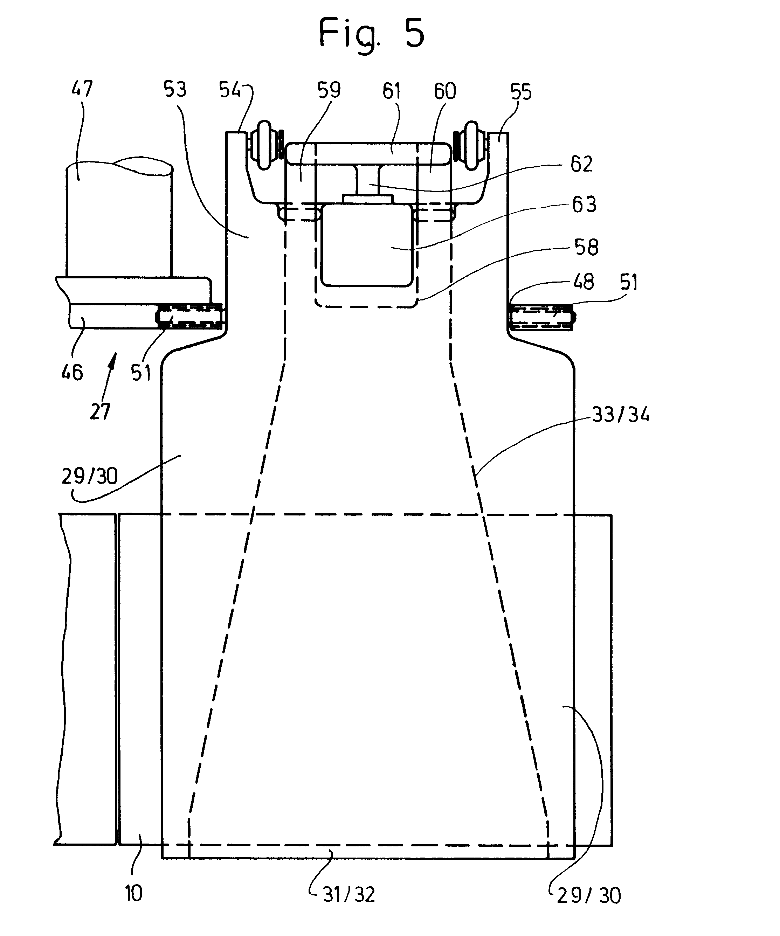

Die Tragschenkel 31, 32 sind zur Durchführung der Bewegungen jeweils mit einem Gelenk bzw. einem durchgehenden Scharnier 35, 36 am unteren Ende der Tragarme 29, 30 befestigt. Die Tragarme sind plattenförmig ausgebildet bzw. als Flachprofil (aus einem Blech von ausreichender Dicke bestehend). Wie insbesondere aus Fig. 5 ersichtlich, beträgt die Breite der Tragarme 29, 30 etwa der Abmessung der zugeordneten (schmalen) Seitenfläche des Kartons 10. Die Tragschenkel 31, 32 haben im vorliegenden Falle eine der Breite der Tragarme 29, 30 entsprechende Länge, so daß die Kartons 10 über eine ausreichende Länge erfaßt werden. Die Scharniere 35, 36 erstrecken sich ebenfalls über die volle Breite der Tragarme 29, 30 bzw. über die Länge der Tragschenkel 31, 32.

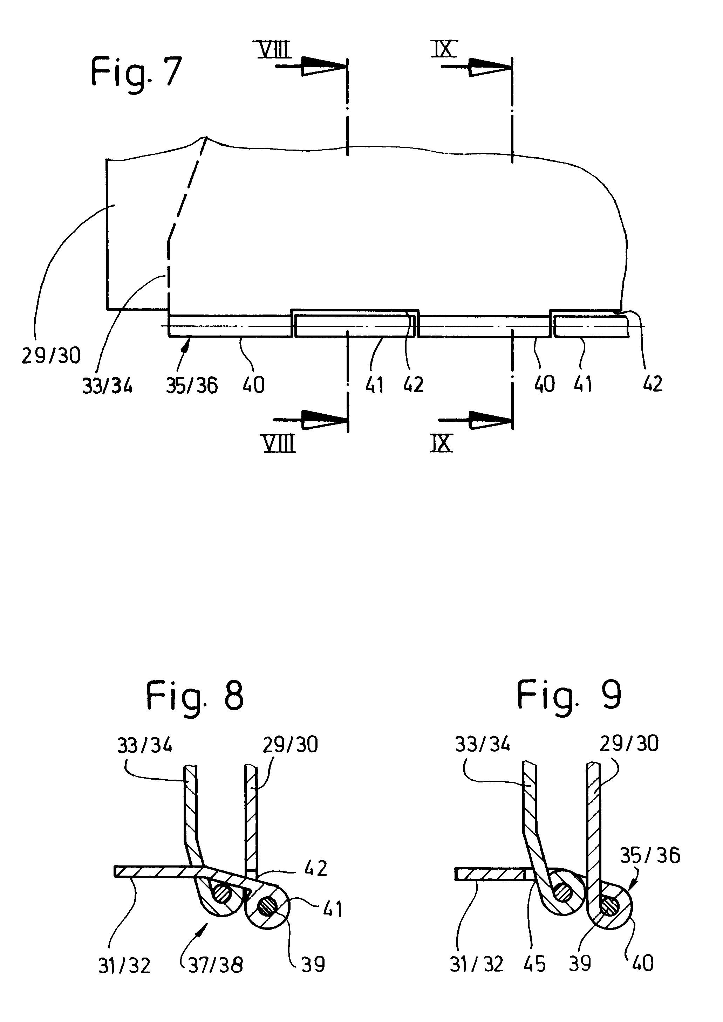

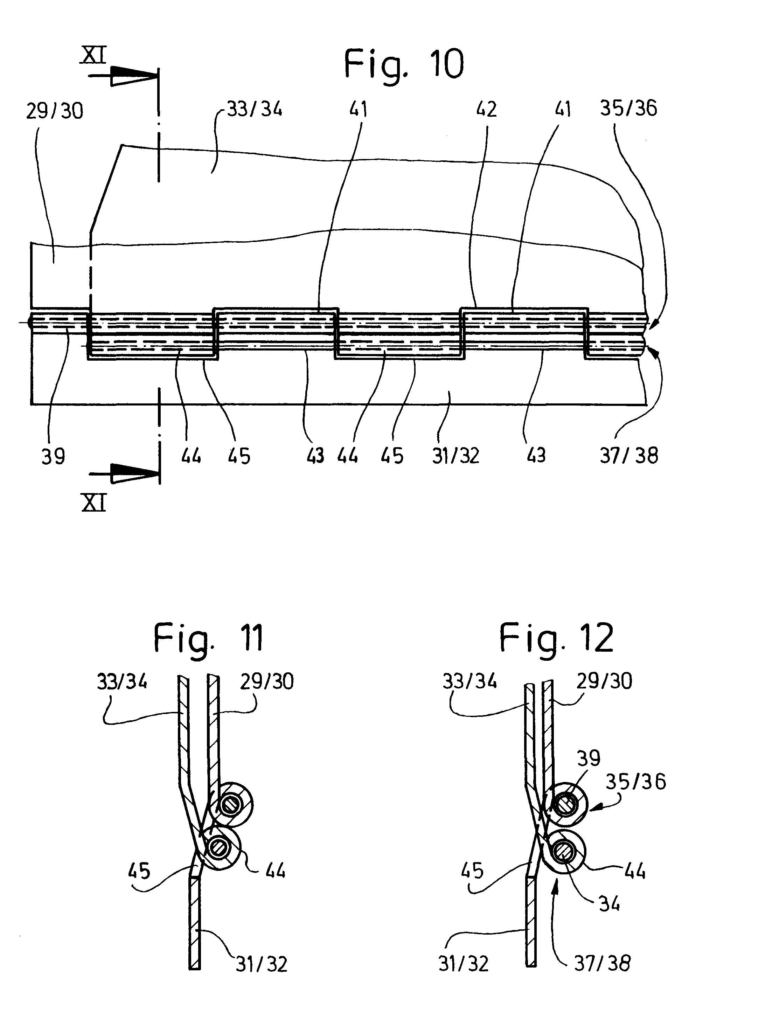

Die Tragschenkel 31, 32 sind bei diesem Ausführungsbeispiel als einarmige Hebel gelagert. Die Betätigungsstege 33, 34 sind auf den einander zugekehrten Seiten, also auf der dem Karton 10 zugekehrten Seite, mit dem Tragschenkel 31, 32 verbunden. Bei der Erzeugung von Zugkräften in den Betätigungsstegen 33, 34 werden die Tragschenkel 31, 32 aus einer aufrechten, nach unten gerichteten Position (Fig. 12) in eine horizontal gerichtete Stellung gemäß Fig. 8 und Fig. 9 bewegt. Bei der Übertragung von Druckkräften in den Betätigungsstegen 33, 34 erfolgt eine Schwenkbewegung in gegenläufiger Richtung bis zur Position gemäß Fig. 12.

Die Betätigungsstege 33, 34 sind ebenfalls sehr breit ausgebildet, mit Querabmessungen, die geringfügig kleiner sind als die der Tragarme 29, 30. Auch die Betätigungsstege 33, 34 bestehen aus einem dünnwandigen Flachmaterial.

Die unteren Enden bzw. Ränder der Betätigungsstege 33, 34 sind ebenfalls gelenkig, und zwar über Betätigungsscharniere 37, 38 mit den Tragschenkeln 31, 32 verbunden. Die Betätigungsscharniere 37, 38 verlaufen parallel zu den Scharnieren 35, 36, und zwar mit einem geringen Versatz in Richtung zu dem zu transportierenden Karton 10.

Die Scharniere 35, 36 bzw. 37, 38 sind als klassische Klavierbänder ausgebildet. Eine durchgehende Scharnierstange 39 der Scharniere 35, 36 wird durch zu einem Scharnierauge 40 bzw. 41 geformten Randbereichen der Tragarme 29, 30 einerseits und der Tragschenkel 31, 32 andererseits umgeben. Die Scharnieraugen 40 der Tragarme 29, 30 sind mit Abstand voneinander angeordnet. In dazwischen liegenden Ausnehmungen 42 treten die Scharnieraugen 41 der Tragschenkel 31, 32 ein. Die ebenfalls in Abständen voneinander angeordneten Scharnieraugen 41 der Tragschenkel 31, 32 sind auf der Scharnierstange 39 drehbar.

Eine weitere, paralle Scharnierstange 43 des Betätigungsscharniers 37, 38 ist durch Scharnieraugen 44 der Betätigungsstege 33, 34 umgeben. Die Scharnieraugen 44 liegen innerhalb von Ausnehmungen 45 der Tragschenkel 31, 32. Die durchgehende Scharnierstange 43 liegt im Bereich zwischen zwei benachbarten Ausnehmungen 45 an der Unterseite bzw. Außenseite des Tragschenkels 31, 32 an. Dadurch wird bei einer aufwärts gerichteten Bewegung des Betätigungsstegs 33, 34 - relativ zum Tragschenkel 31, 32 - der Tragschenkel 31, 32 unter Drehung auf der Scharnierstange 39 bis in die horizontale Tragstellung verschwenkt. Das untere Ende des Betätigungsstegs ist nach außen abgekröpft.

Die vorstehend beschriebene Anordnung der Tragschenkel 31, 32 an den Tragarmen 29, 30 und die Verbindung der Betätigungsstege 33, 34 mit den Tragschenkeln 31, 32 ermöglicht eine sehr zuverlässige Bewegung der Tragschenkel 31, 32. Des weiteren ist eine stabile Tragposition bei horizontaler Ausrichtung der Tragschenkel 31, 32 gegeben. Der besondere Vorteil liegt aber darin, daß in der nach unten gerichteten Strecklage der Tragschenkel 31, 32 (Fig. 12) die einander zugeordneten Scharniere 35 und 37 bzw. 36 und 38 exakt untereinanderliegen, so daß die Abmessungen in Querrichtung äußerst gering sind. Auch die Tragschenkel 31, 32 und die jeweils zugeordneten Betätigungsstege 33, 34 liegen in einem sehr geringen Abstand voneinander bei paralleler Führung (Fig. 12).

Daraus ergibt sich die Möglichkeit, die Kartons 10 auch dort abzusetzen, wo durch benachbarte Kartons oder durch andere Gegenstände nur ein geringer seitlicher Zwischenraum zur Verfügung steht (Fig. 4). Dabei wird so vorgegangen, daß beim Absetzen der Kartons 10 die Tragschenkel 31, 32 außer Eingriff mit dem Karton 10 bewegt werden, wenn dieser eine Position mit geringem Abstand oberhalb der Aufnahmeebene bzw. oberhalb eines bereits abgesetzten Kartons 10 erreicht hat. Die flächigen Betätigungsstege 33, 34 liegen dabei an den zugekehrten Seitenflächen der Kartons 10 an, so daß diese bis zum Absetzen auf der Lagerfläche (Karton) unter Eigengewicht an den Betätigungsstegen 33, 34 abwärts gleiten. Der Greifer 27 kann nun aufwärts bewegt werden, wobei die Tragarme 29, 30 mit den Tragschenkeln 31, 32 und den Betätigungsstegen 33, 34 in einem sehr schmalen Spalt zwischen benachbarten Kartons bewegt werden können.

Die beschriebenen Tragorgane für die Kartons 10 sind an einem gemeinsamen Träger des Greifers 27 angeordnet, im vorliegenden Falle an einer Tragplatte 46. Diese wiederum ist mit dem Gelenkarm 24 verbunden, im vorliegenden Fall über eine mittige Tragstange 47.

Die Tragarme 29, 30 sind an den äußeren Rändern der Tragplatte 46 befestigt, und zwar schwenkbar. Die Tragarme 29 sitzen in seitlichen Vertiefungen 48 der Tragplatte 46. Die Vertiefung 48 seitlich begrenzende Vorsprünge 49, 50 als Verlängerung der Tragplatte 48 dienen zur Aufnahme eines Lagers 51 für Lagerzapfen 52 an den einander gegenüberliegenden Seiten der Tragarme 29, 30.

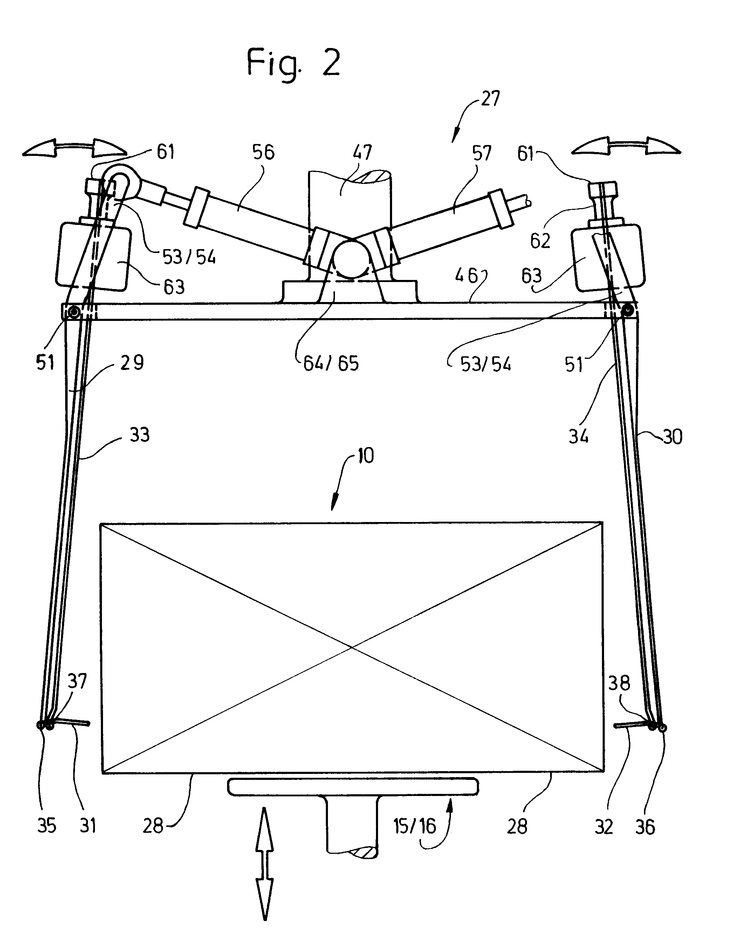

Zur Betätigung der Tragarme 29, 30 im Sinne einer Schwenkbewegung sind die Tragarme 29, 30 nach oben hin über das Lager 51, 52 hinaus verlängert unter Bildung eines Drehstücks 53. Dessen oberes Ende ist gabelförmig ausgebildet. An seitlichen Fingern 54, 55 greifen Kolbenstange von Druckmittelzylindern 56, 57 an. Mit Hilfe dieser Druckmittelzylinder 56, 57 können demnach die Tragarme 29, 30 verschwenkt werden aus der vertikalen Position in eine Schrägstellung gemäß Fig. 2.

Die Betätigungsstege 33, 34 sind so mit den Tragarmen 29, 30 verbunden, daß sie die Schwenkbewegung mit ausführen.

Der obere Bereich der Betätigungsstege 33, 34 ist ebenfalls mit einer Ausnehmung 58 versehen. Es entstehen dadurch seitliche Stege 59, 60. Diese sind an ihrem oberen Ende durch eine Traverse 61 miteinander verbunden. Diese wiederum sitzt am Ende einer Kolbenstange 62 eines Druckmittelzylinders 63 in der Ausführung eines Kurzhub-Zylinders. Der Druckmittelzylinder 63 ist mit dem zugeordneten Tragarm 29, 30, nämlich mit dessen Drehstück 53 verbunden. Der Druckmittelzylinder 56 bewirkt die Auf- und Abwärtsbewegungen des Betätigungsstegs 33, 34 zum Verstellen der Tragschenkel 31, 32.

Die bereits genannten Druckmittelzylinder 56, 57 zum Verschwenken der Tragarme 29, 30 sind auf der Tragplatte 46 gelagert, nämlich in Lagerböcken 64, 65 an der Oberseite der Tragplatte 46, in einer Längsmittelebene derselben.

Die Schwenkbewegung der Tragarme 29, 30 ist für die Arbeitsweise des Greifers 27 von Bedeutung. Bei Übernahme eines Kartons 10 von der Plattform 15, 16 wird der Tragschenkel 35, 36 in die horizontale Tragstellung gebracht, bevor der Karton 10 erfaßt ist (Fig. 2). Die Tragarme 29, 30 werden seitlich an dem Karton 10 entlang abwärts bewegt, bis sich die Tragschenkel 31, 32 unterhalb desselben befinden. Durch Verschwenken der Tragarme 29, 30 in die aufrechte Position gelangen die Tragschenkel 31, 32 an die Unterseite des Kartons 10, so daß dieser nun in der beschriebenen Weise angehoben und transportiert werden kann.

Bei dem vorliegenden Ausführungsbeispiel ist die Tragplatte 46 in doppelter Breite ausgeführt, derart, daß zwei Kartons 10 gleichzeitig erfaßt werden können. Der Greifer 27 ist mit zwei Paaren von einander gegenüberliegenden Tragarmen 29, 30 mit Tragschenkeln 31, 32 etc. ausgestattet. Diese miteinander verbundenen Teilgreifer, die je einem Karton 10 zugeordnet sind, können individuell gesteuert werden. Dadurch ist es möglich, die beiden aufgenommenen Kartons 10 einzeln und an verschiedenen Positionen abzusetzen. Auch ist es erforderlichenfalls möglich, Kartons 10 an unterschiedlichen Stellungen aufzunehmen. Alternativ können doppelt große Kartons gehandhabt werden, wobei beide Paare von Tragarmen 29, 30 den Karton erfassen.

**Patentansprüche**

1. Vorrichtung zum Aufnehmen, Fördern und Absetzen von Gegenständen, insbesondere Kartons, mit einem heb- und senkbaren sowie quer verfahrbaren Greifer (27) zum Erfassen wenigstens eines Gegenstands (Kartons 10) mit aufrechten Tragarmen (29, 30), die sich beim Transport eines Gegenstands (Kartons 10) zu beiden Seiten desselben erstrecken, und mit schwenkbar an den Tragarmen (29, 30) angebrachten Tragschenkeln (31, 32), die durch aufrechte Betätigungsorgane (Betätigungsstege 33, 34) in eine horizontal gerichtete Tragstellung bzw. in eine im wesentlichen vertikal gerichtete Freigabestellung bewegbar sind, **dadurch gekennzeichnet**, daß die Tragschenkel (31, 32) als einarmige Hebel ausgebildet und die Betätigungsorgane (Betätigungsstege 33, 34) auf der dem Gegenstand (Karton 10) zugekehrten Seite mit Abstand von den Tragarmen (29, 30) gelenkig mit den Tragschenkeln (31, 32) verbunden sind, derart, daß die Tragschenkel (31, 32) ausschließlich durch Zugkräfte in den Betätigungsorganen (Betätigungsstegen 33, 34) in der Tragstellung gehalten sind.

2. Vorrichtung nach Anspruch 1, dadurch gekennzeichnet, daß die Betätigungsstege (33, 34) aus dünnwandigem (Flach-)Material ausgebildet sind und parallel zu den Tragarmen (29, 30) verlaufen.

3. Vorrichtung nach Anspruch 1 oder 2, dadurch gekennzeichnet, daß die Tragarme (29, 30) als breite, flächige Organe aus dünnwandigem (Flach-)Material ausgebildet sind und in der Breite etwa der Abmessung der zugekehrten Seite des Gegenstands entsprechen.

4. Vorrichtung nach Anspruch 1 sowie einem oder mehreren der weiteren Ansprüche, dadurch gekennzeichnet, daß die Tragschenkel (31, 32) beim Transport eines Gegenstands (Kartons 10) an gegenüberliegenden Seiten an der Unterseite des Gegenstands (Kartons 10) angreifen.

5. Vorrichtung nach Anspruch 2 sowie einem oder mehreren der weiteren Ansprüche, dadurch gekennzeichnet, daß die Betätigungsstege (33, 34) als breite Organe ausgebildet sind.

6. Vorrichtung nach Anspruch 1 sowie einem oder mehreren der weiteren Ansprüche, dadurch gekennzeichnet, daß die Tragschenkel (31, 32) gelenkig am unteren Ende (Rand) der Tragarme (29, 30) angebracht sind, insbesondere mit Scharnieren (35, 36), die sich (etwa) über die gesamte Breite der Tragarme (29, 30) erstrecken.

7. Vorrichtung nach Anspruch 1 sowie einem oder mehreren der weiteren Ansprüche, dadurch gekennzeichnet, daß die unteren Enden (Ränder) der Betätigungsstege (33, 34) mittels Gelenk, insbesondere mit einem parallel zu den Scharnieren (35, 36) angeordneten Betätigungsscharnier (37, 38) mit den Tragschenkeln (31, 32) verbunden sind.

8. Vorrichtung nach Anspruch 7, dadurch gekennzeichnet, daß das Betätigungsscharnier (37, 38) mit einer durchgehenden Scharnierstange (43) versehen ist, auf der die Tragschenkel (31, 32) mit Abschnitten aufliegen.

9. Vorrichtung nach Anspruch 6 sowie einem oder mehreren der weiteren Ansprüche, dadurch gekennzeichnet, daß bei gestreckter, aufrechter Position der Tragschenkel (31, 32) diese in Verlängerung der Tragarme (29, 30) bzw. Betätigungsstege (33, 34) angeordnet sind und die Scharniere (35, 36) sowie die Betätigungsscharniere (37, 38) untereinanderliegen, wobei die Tragarme (29, 30) und die Betätigungsstege (33, 34) den geringsten Abstand voneinander aufweisen.

10. Vorrichtung nach Anspruch 1 sowie einem oder mehreren der weiteren Ansprüche, dadurch gekennzeichnet, daß die Tragarme (29, 30) sowie die Betätigungsstege (33, 34) an einem gemeinsamen Träger des Greifers (27) befestigt sind, insbesondere an einer Tragplatte (46), wobei die Tragarme (29, 30) gelenkig an zwei gegenüberliegenden Rändern der Tragplatte (46) gelagert sind.

11. Vorrichtung nach Anspruch 9 sowie einem oder mehreren der weiteren Ansprüche, dadurch gekennzeichnet, daß die Tragarme (29, 30) in eine Schrägstellung - in Richtung zu den Tragschenkeln (31, 32) divergierend - bewegbar sind, insbesondere bei Aufnahme eines Gegenstands (Karton 10).

12. Vorrichtung nach Anspruch 10, dadurch gekennzeichnet, daß auf der Oberseite der Tragplatte (46) Druckmittelzylinder (56, 57) zur Betätigung der Tragarme (29, 30) in schwenkendem Sinne angeordnet sind, wobei die Druckmittelzylinder (56, 57) mit Verlängerungen, nämlich Drehstücken (53), der Tragplatte verbunden sind.

13. Vorrichtung nach Anspruch 1 sowie einem oder mehreren der weiteren Ansprüche, dadurch gekennzeichnet, daß die Betätigungsstege (33, 34) jeweils durch einen Druckmittelzylinder (63) (Kurzhub-Zylinder) in Aufwärts- und Abwärtsrichtung bewegbar sind, wobei der Druckmittelzylinder (63) im Bereich der Tragplatte (46) angeordnet und insbesondere mit dem zugeordneten Tragarm (29, 30) verbunden ist.

14. Vorrichtung nach Anspruch 1 sowie nach einem oder mehreren der weiteren Ansprüche, dadurch gekennzeichnet, daß der Greifer für die Aufnahme mehrerer, insbesondere zweier nebeneinander liegender Gegenstände (Kartons 10) dimensioniert ist, wobei jedem Karton (10) zwei einander gegenüberliegende Tragarme (29, 30) mit Tragschenkeln (31, 32) zum Erfassen zugeordnet sind und wobei die Paare von Tragarmen (29, 30) bzw. Tragschenkeln (31, 32) individuell steuerbar sind zum Absetzen einzelner Kartons.

# Fig. 1

Fig. 2

# Fig. 3

Fig. 4

EP 0 482 406 A1

# Fig. 5

Fig. 6

Fig. 7

Fig. 8

Fig. 9

# Fig. 10

XI

29/30   33/34   41   42   41   35/36

39   44   45   43   44   45   31/32   43   37/38

XI

# Fig. 11

33/34   29/30

45   44

31/32

# Fig. 12

33/34   29/30

39   35/36

45   44   34

31/32   37/38

**Europäisches
Patentamt**

Nummer der Anmeldung

**EUROPÄISCHER
RECHERCHENBERICHT**

**EP 91 11 7001**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 802 620  (WINTER)<br>* das ganze Dokument * * | 1,4 | B 65 G 47/90<br>B 66 C 1/28 |
| A | | 2,3,5,6,9,<br>13 | |
| | – – – | | |
| A | DE-A-3 540 121  (MÖLLERS MASCHINENFABRIK)<br>* das ganze Dokument * * | 1-4,6-9 | |
| | – – – | | |
| A | DE-A-2 350 919  (ETS. BALBINOT)<br>* Abbildungen 2,4 * * | 10-12 | |
| | – – – – – | | |

**RECHERCHIERTE
SACHGEBIETE (Int. Cl.5)**

B 65 G
B 66 C

Der vorliegende Recherchenbericht wurde für alle Patentansprüche erstellt

| Recherchenort | Abschlußdatum der Recherche | Prüfer |
|---|---|---|
| Berlin | 31 Januar 92 | SIMON J J P |